# FASCICULE DE BREVET EUROPEEN

(11) **EP 0 811 797 B1**
(45) Date de publication et mention de la délivrance du brevet: **06.09.2000**
(21) Numéro de dépôt: 97420082.6
(22) Date de dépôt: 02.06.1997
(51) Int. Cl.: F16L 37/084

(54) **Raccord rapide de sécurité pour la jonction amovible des canalisations**
Sicherheitsschnellkupplung für die lösbare Verbindung von Rohrleitungen
Quick acting safety coupling for the disconnectable connection of pipe lines

(30) Priorité: 03.06.1996 FR 9607116
(43) Date de publication de la demande: 10.12.1997
(73) Titulaire: STAUBLI FAVERGES, 74210 Faverges (FR)
(72) Inventeur: Lacroix, Jean-Jacques, 74330 Lovagny (FR); Laporte, Christophe, 74210 Doussard (FR)
(74) Mandataire: Myon, Gérard Jean-Pierre

(56) Documents cités:
- EP-A- 0 340 518
- EP-A- 0 511 436
- US-A- 3 873 062
- US-A- 4 681 350

## Description

La présente invention a trait aux raccords rapides utilisés pour la jonction amovible des canalisations, du genre comprenant deux éléments mâle et femelle propres à s'emmancher et à se verrouiller l'un à l'intérieur de l'autre en provoquant l'ouverture automatique d'un clapet chargé monté dans l'élément femelle relié à la source du fluide sous pression qui traverse le dispositif.

Dans le document EP-A-0 722 063 (STAUBLI) publié le 17.07.1996 est décrit et revendiqué un raccord de sécurité du type à griffes de verrouillage, propre à éviter systématiquement tout risque d'expulsion brutale de l'élément mâle hors de l'élément femelle lors de la manoeuvre du dispositif au désaccouplement, à la manière des raccords classiques dits "à double détente" dans lesquels le verrouillage est opéré à l'aide d'un verrou à déplacement transversal.

Le raccord de sécurité suivant le document précité comprenait deux organes annulaires en forme de bagues, pourvues de griffes longitudinales et engagées l'une à l'intérieur de l'autre entre le corps de l'élément femelle et un fourreau de manoeuvre à déplacement axial. Les griffes de l'organe annulaire ou bague de verrouillage étaient agencées pour venir s'engager élastiquement dans une dépression annulaire de l'élément mâle en vue d'immobiliser celui-ci à la position accouplée, tandis que celles de la bague de sécurité venaient, à la suite d'une première manoeuvre du fourreau précité, coopérer avec la même dépression de l'élément mâle pour bloquer celui-ci à une position intermédiaire de décompression, la libération complète de l'élément mâle n'intervenant qu'après une seconde manoeuvre exercée sur le fourreau.

Cet agencement s'est révélé entièrement satisfaisant dans le cas des éléments mâles dans lesquels la dépression annulaire de verrouillage est bordée par deux épaulements présentant deux parois orientées obliquement à l'opposé l'une de l'autre, la paroi qui est tournée en direction de l'embout terminal du corps de l'élément mâle formant rampe pour assurer l'ouverture des griffes de la bague de sécurité lors de la seconde manoeuvre du fourreau.

Il est clair qu'un tel agencement ne peut par contre convenir dans le cas où la dépression annulaire de verrouillage est bordée, du côté tourné vers l'extrémité de l'embout de l'élément mâle, par une collerette pratiquement droite, c'est-à-dire orientée de manière substantiellement perpendiculaire à l'axe de l'ensemble du raccord. Or les éléments mâles de ce type se rencontrent fréquemment dans le secteur des raccords pour canalisations.

En conséquence, c'est cette lacune que la présente invention entend combler, en proposant un raccord rapide de sécurité du type à verrouillage par griffes qui est agencé pour fonctionner à la manière des raccords dits "à double détente" en combinaison avec des éléments mâles dont l'embout d'emmanchement présente une collerette de verrouillage à paroi substantiellement droite.

L'invention a pour objet le raccord rapide qui est défini à la revendication 1 et aux revendications qui sont rattachées à celle-ci.

En fait l'élément femelle du raccord suivant l'invention comprend, comme dans le cas du document européen susmentionné, deux organes annulaires ou bagues à griffes qui sont engagés l'un à l'intérieur de l'autre pour être commandés par un fourreau chargé de manoeuvre. Toutefois, conformément à l'invention, les griffes de la bague intérieure de verrouillage comportent à leur extrémité libre une protubérance profilée, disposée latéralement par rapport à la tête terminale de ladite extrémité, et sont engagées dans les mêmes lumières du corps de l'élément femelle que les griffes de la bague extérieure, de façon à ce que dans un premier temps (position accouplée), ces griffes, coopérant avec un bord en forme de rampe des lumières précitées, maintiennent les protubérances appliquées dans la dépression annulaire de l'élément mâle emmanché, tandis que dans un second temps les têtes des griffes coopèrent avec la paroi de l'ouverture axiale du fourreau pour rester appliquées dans la dépression annulaire précitée en assurant l'immobilisation de cet élément mâle à la position intermédiaire de décompression.

On conçoit que dans un tel système la paroi substantiellement droite de la collerette de l'embout d'emmanchement ne constitue pas une gêne au fonctionnement des griffes de verrouillage et de sécurité.

Le dessin annexé, donné à titre d'exemple, permettra de mieux comprendre l'invention, les caractéristiques qu'elle présente et les avantages qu'elle est susceptible de procurer:
- Figure 1 est une coupe axiale de l'élément femelle d'un dispositif de raccord rapide suivant l'invention, dont l'élément mâle est représenté très partiellement, immédiatement avant emmanchement dans ledit élément femelle.
- Figure 2 illustre en perspective l'agencement des deux bagues à griffes du dispositif suivant la figure 1.
- Figure 3 est une coupe brisée à plan sécant, à échelle légèrement réduite.
- Figures 4 à 9 sont des coupes similaires à figure 1 (établies à la même échelle que figure 3), montrant la position des pièces à une série de phases successives du fonctionnement du dispositif.
- Figure 10 montre une variante de profil de l'élément mâle.

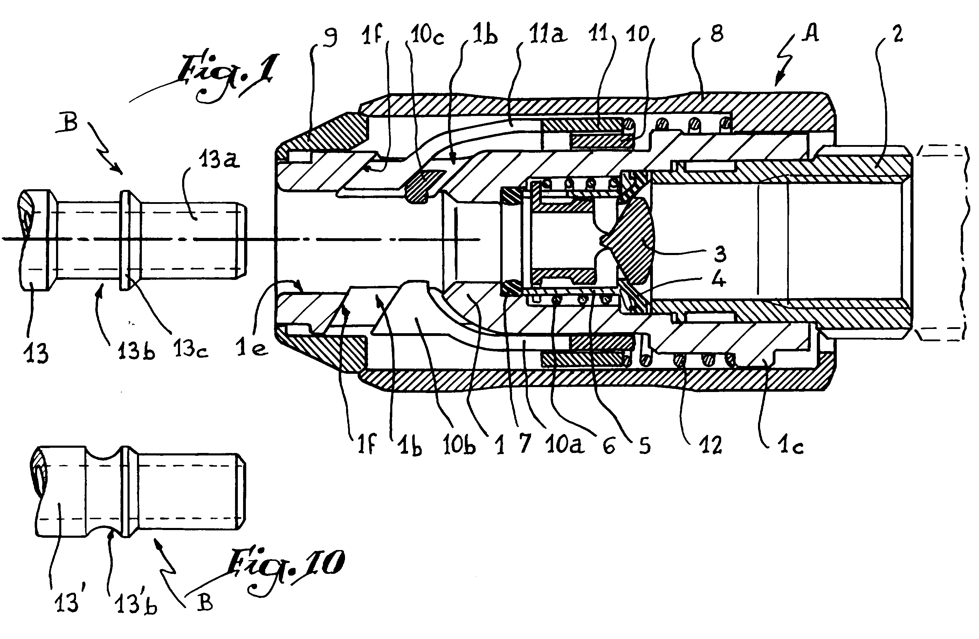

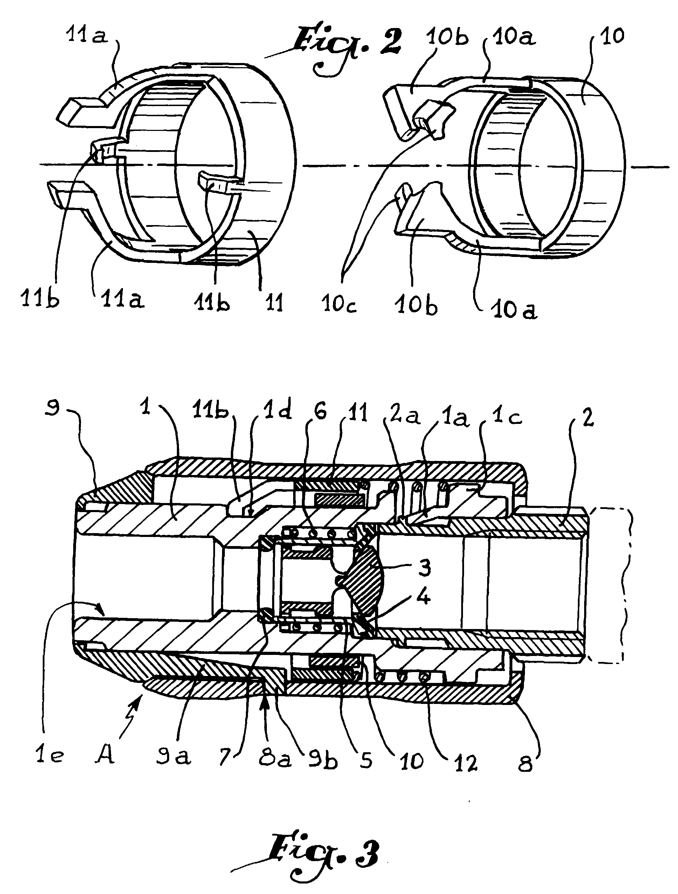

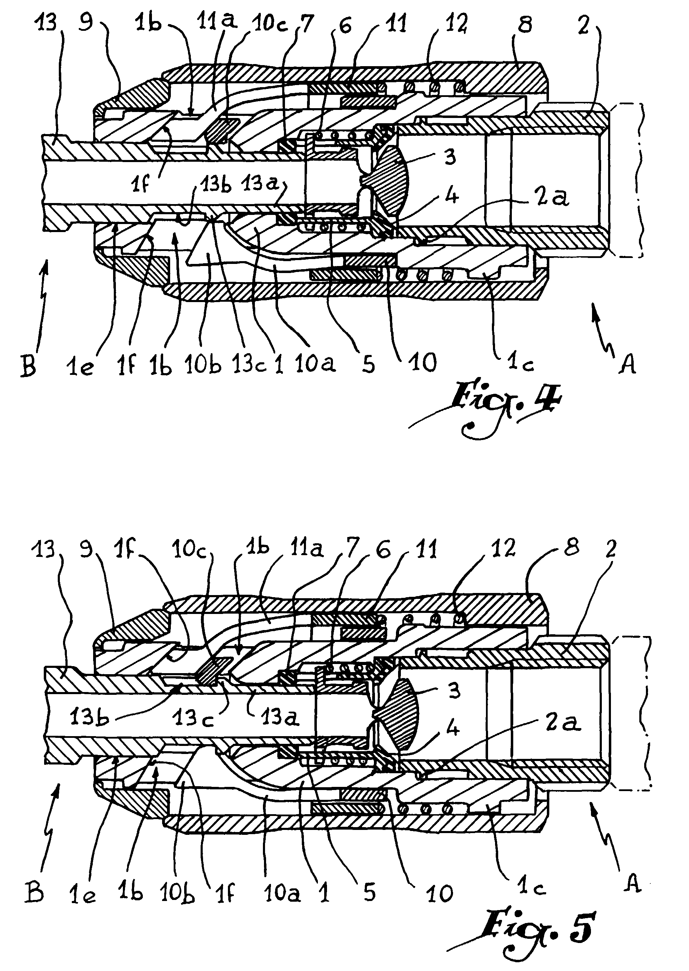

Le corps de l'élément femelle A du dispositif représenté en figure 1 est constitué par l'assemblage de deux pièces tubulaires, à savoir une pièce principale 1 et une pièce arrière 2, cet assemblage étant opéré par encliquetage élastique de languettes obliques 1a (cf. figure 3) en arrière d'un épaulement annulaire 2a de la pièce 2. Cette dernière maintient en place l'ensemble formé par le clapet tubulaire 3, le siège ou joint 4 de celui-ci, le porte-clapet 5 et le ressort de rappel 6 ; on notera que le porte-clapet 5 assure la retenue du joint torique 7 destiné à assurer l'étanchéité de l'emmanchement de l'élément mâle B du dispositif.

Le corps 1-2 ainsi constitué est entouré par un fourreau de manoeuvre formé par un manchon 8 et une douille antérieure 9. Comme montré en figure 3, la douille 9 est solidaire de prolongements longitudinaux 9a qui se terminent par un talon 9b tourné vers l'extérieur de façon à s'encliqueter élastiquement dans une fenêtre correspondante 8a pratiquée à cet effet dans le manchon 8.

Sur la pièce principale 1 du corps 1-2 coulisse une première bague 10, dite de verrouillage et pourvue de deux griffes longitudinales 10a tournées vers l'avant (à gauche sur le dessin). L'extrémité libre de chacune des griffes 10a comporte une tête profilée 10b qui est latéralement solidaire d'une protubérance de verrouillage 10c dont le profil apparaît bien en figure 1 et 2 et dont le rôle sera exposé plus loin. Chaque extrémité 10b-10c est engagée dans une lumière 1b de la pièce 1.

Sur la bague 10 coulisse une seconde bague 11 elle-même pourvue de deux griffes longitudinales 11a, l'extrémité libre de chacune d'elles étant introduite dans l'une des deux lumières 1b précitées. Un ressort 12, prenant appui contre des butées arrière 1c de la pièce 1, tend à repousser vers la gauche la bague 11 et à engager plus profondément les griffes dans les lumières 1b, ce mouvement étant toutefois limité par butée de deux dents 11b (dont une seule apparaît en figure 3) de ladite bague 11 contre l'extrémité d'un méplat 1d ménagé à cet effet sur la périphérie de la pièce principale 1 du corps 1-2.

A la façon en soi connue, le corps cylindrique 13 de l'élément mâle B présente un embout axial d'emmanchement 13a sur lequel est pratiquée la dépression axiale annulaire de verrouillage 13b, laquelle est bordée par une collerette 13c dont la paroi tournée en direction de ladite dépression est prévue droite.

Pour exposer le fonctionnement du dispositif qui vient d'être décrit, on partira de la position illustrée en figure 1 et 3 où l'on a supposé que les deux éléments A et B étaient désaccouplés.

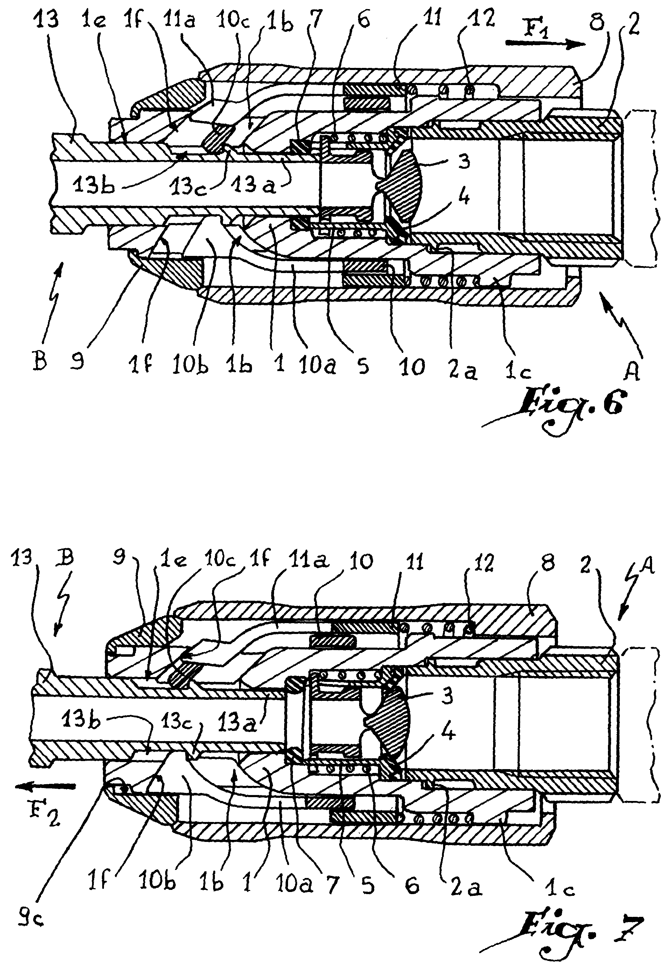

Pour l'accouplement, l'utilisateur introduit l'embout 13a dans l'alésage axial 1e de la pièce 1. Comme montré en figure 4, l'embout 13a repousse (vers la droite) le clapet 3 qui s'ouvre à l'encontre de son ressort 6, le joint 7 assurant l'étanchéité du raccordement. On notera que la collerette 13c soulève au passage les protubérances 10c qui s'écartent de manière substantiellement radiale.

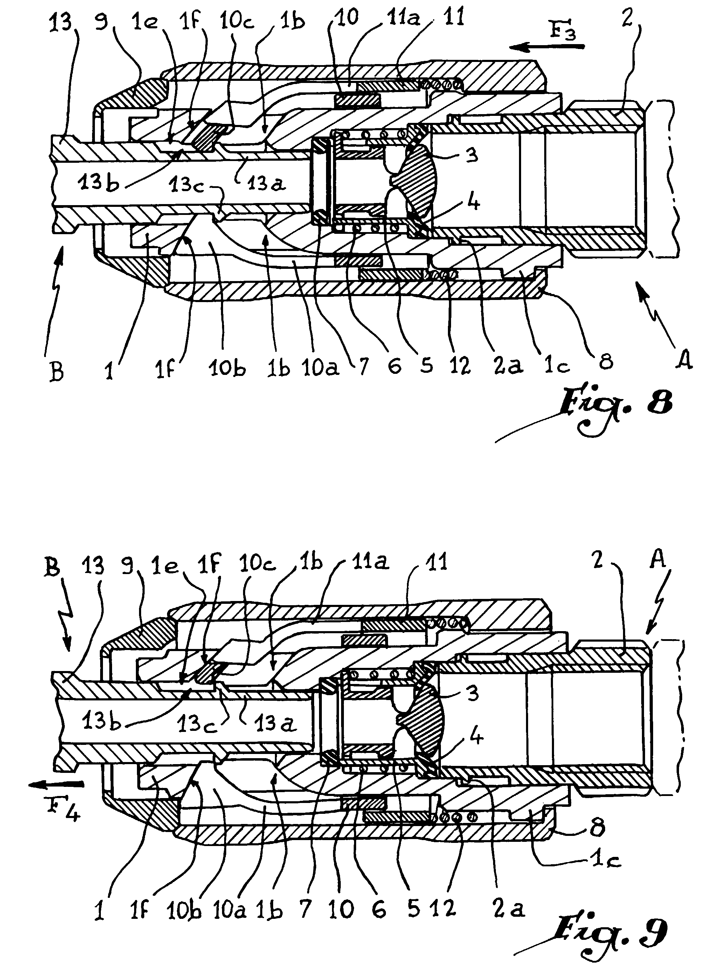

Dans ces conditions, une fois que la collerette 10c s'est engagée de manière suffisante (figure 5), les griffes 10a, assistées par les griffes 11a et le ressort 12, reviennent radialement en engageant élastiquement dans la dépression 13b les protubérances 10c en arrière de ladite collerette 13c, à la manière illustrée en figure 5. Les deux éléments A et B du dispositif se trouvent ainsi à la position verrouillée d'accouplement suivant figure 5, le clapet 3 assurant la communication entre lesdits éléments. On observera qu'à cette position, les griffes 11a, recevant l'action du bord antérieur oblique 1f des lumières 1b agissant à la manière d'une rampe, opèrent la retenue des protubérances 10c à la position de verrouillage.

Si maintenant on suppose qu'en vue du désaccouplement des deux éléments A et B, l'opérateur agit axialement sur le fourreau de manoeuvre 8-9 en le repoussant vers la droite à la manière illustrée en figure 6 par la flèche F₁ (de gauche à droite), le recul de la douille 9 amène la paroi de l'ouverture axiale de celle-ci à la hauteur de la tête 10b des griffes 10a qui ne peuvent de ce fait s'écarter radialement vers l'extérieur. On notera que ce mouvement de recul est transmis à la bague 11 par appui des talons 9b des prolongements 9a de la douille 9 à l'encontre de l'action du ressort 12, si bien que l'extrémité des deux griffes 11a de cette bague 11 se déplace en glissant sur les protubérances 10c.

De plus le ressort 6 du clapet 3, aidé par la pression du fluide qui emplit la canalisation associée à l'élément mâle B, tend à repousser axialement ce dernier vers la gauche (flèche F₂ de figure 7), de sorte que la collerette 13c exerce une traction sur les têtes 10b des griffes 10a, et que les deux têtes 10b se trouvent emprisonnées par l'ouverture axiale de la douille 9. L'embout 13a et le corps 13 se déplacent donc vers l'extérieur (de droite à gauche en figure 7). Dans ces conditions, le clapet 3 peut se fermer sous l'effet de son ressort 6 et le fluide sous pression contenu dans la canalisation aval raccordée au corps 13 de l'élément mâle B s'échappe à l'extérieur du dispositif, le joint torique 7 n'assurant plus sa fonction d'étanchéité.

L'opérateur relâche son effort sur le fourreau 8-9 qui revient vers la gauche sous l'effet du ressort 12.

On se trouve en conséquence à la position de décompression illustrée en figure 7. L'élément mâle B ne peut être expulsé hors de l'élément femelle A par suite de l'application des têtes 10b des griffes 10a, immédiatement en arrière de la collerette 13c, à l'intérieur de la dépression 13b, la paroi 9c de l'ouverture de la douille 9 interdisant au surplus toute déformation des griffes 10a..

En fin de décompression, l'opérateur agit une nouvelle fois sur le fourreau de manoeuvre 8-9 en le déplaçant de la droite vers la gauche (flèche F₃ de figure 8). Dans ces conditions l'ouverture de la douille 9 libère la tête 10b des griffes 10a qui peuvent s'ouvrir (figure 9) sous l'effet d'un effort de traction exercé par l'utilisateur sur l'élément mâle B (flèche F₄), en laissant passage à la collerette 13c, étant observé que le mouvement d'écartement précité est autorisé par les protubérances 10c qui s'ouvrent d'elles-mêmes par suite de leur portée contre le bord antérieur oblique 1f des lumières 1b agissant à la manière d'une rampe.

En conséquence la collerette 13c n'est plus retenue à l'intérieur de l'alésage axial 1e de la pièce 1 et l'élément mâle B est ainsi susceptible d'être totalement dégagé hors dudit alésage. On revient de la sorte à la position désaccouplée suivant figure 1 et 3, le dispositif étant prêt à une nouvelle opération d'accouplement.

On conçoit finalement que le dispositif de raccord rapide à griffes suivant la présente invention présente la sécurité des appareillages à double détente classiques en dépit du profil droit de la paroi de la collerette 13c qui est tournée vers la dépression annulaire de verrouillage 13b.

On observera sur ce point que l'invention est susceptible d'être avantageusement mise en oeuvre en combinaison avec des raccords rapides dont l'élément mâle comporte une collerette pourvue, du côté de la dépression annulaire de verrouillage, d'une paroi qui, sans être orientée de manière strictement orthogonale par rapport à l'axe du corps dudit élément, constitue un obstacle pour les extrémités des griffes et définit une partie en saillie formant appui pour la traction exercée par les têtes de celles-ci. Figure 10 illustre un tel élément mâle 13' dont la dépression annulaire 13'b est établie à un profil semi-circulaire.

## Revendications

1. Raccord rapide pour la jonction amovible des canalisations, comprenant un élément femelle (A), un élément mäle (B) et un mécanisme de verrouillage du genre dans lequel le mécanisme de verrouillage porté par l'élément femelle (A) pour immobiliser axialement l'élément mâle (B) une fois que l'emmanchement de celui-ci dans l'élément femelle a provoqué l'ouverture d'un clapet chargé (3) monté dans l'élément femelle, comprend deux organes annulaires en forme de bagues (10, 11) qui sont pourvues de griffes longitudinales (10a, 11a) et qui sont engagées l'une à l'intérieur de l'autre entre le corps (1-2) de l'élément femelle et un fourreau de manoeuvre (8-9) à déplacement axial, les deux extrémités des griffes précitées venant coopérer, à travers des lumières pratiquées dans ledit corps, avec une dépression annulaire de verrouillage (13b) ménagée sur le corps (13) de l'élément mâle afin d'assurer le verrouillage de ce dernier à la position accouplée, et après une première manoeuvre de l'opérateur sur le fourreau, l'immobilisation de cet élément mâle à une position intermédiaire de décompression, tandis qu'une seconde manoeuvre exercée en sens inverse sur le fourreau assure la libération complète de l'élément mâle qui peut alors être extrait du corps de l'élément femelle, dans lequel les griffes (10a) de la bague intérieure de verrouillage sont pourvues à leur extrémité libre d'une protubérance (10c) disposée latéralement par rapport à la tête terminale (10b) de ladite extrémité et sont engagées dans les mêmes lumières (1b) du corps (1-2) que les griffes (11a) de la bague extérieure (11), de façon à ce que dans un premier temps, dit de position accouplée, les griffes (11a) de la bague extérieure (11), coopérant avec un bord (1f) en forme de rampe des lumières précitées, maintiennent les protubérances (10c) appliquées dans la dépression annulaire (13b) de l'élément mâle emmanché, tandis que dans un second temps les têtes (10b) des griffes (10a) de la bague intérieure (10) coopérent avec la paroi (9c) de l'ouverture axiale du fourreau pour rester appliquées dans la dépression annulaire précitée en assurant l'immobilisation de cet élément mâle à la position intermédiaire de décompression, la dépression annulaire (13b) étant à la façon en soi connue bordée par une collerette (13c) à paroi substantiellement droite.

2. Raccord suivant la revendication 1, caractérisé en ce que la bague extérieure (11) est pourvue de dents (11b) établies à une longueur inférieure à celle des griffes (11a) de façon à coopérer avec des méplats (1d) pratiqués sur le corps (1-2) de l'élément femelle (A) pour limiter le déplacement axial de ladite bague (11) sous l'effet de moyens élastiques (12) qui lui sont associés.

3. Raccord suivant l'une quelconque des revendications 1 et 2, caractérisé en ce que le fourreau de manoeuvre (8-9) comporte au moins un talon (9b) apte à prendre appui contre la bague extérieure (11) afin d'assurer son déplacement à l'encontre de moyens élastiques (12) qui lui sont associés.

## Patentansprüche

1. Schnellkupplung für die lösbare Verbindung von Rohrleitungen, ein Buchsenelement (A), ein Steckelement (B) und einen Verriegelungsmechanismus umfassend und von der Art, bei der der Verriegelungsmechanismus des Buchsenelements (A) zur axialen Arretierung des Steckelements (B), dessen Einführung in das Buchsenelement die Öffnung eines belasteten Ventils (3) bewirkt, zwei ringförmige Teile (10, 11) umfasst, die Längsklauen (10a, 11a) aufweisen und zwischen dem Körper (1-2) des Buchsenelements und einer axial verschiebbaren Betätigungshülse (8-9) ineinander stecken, wobei die beiden Enden der vorerwähnten Klauen durch Öffnungen, die in dem genannten Körper vorgesehen sind, mit einer ringförmigen Verriegelungsvertiefung (13b) zusammenwirken, die der Körper (13) des Steckelements aufweist, um die Verriegelung dieses letzteren in der gekuppelten Stellung und, nach einer ersten Betätigung der Schiebehülse durch den Benutzer, die Arretierung dieses Steckelements in einer Dekompressions-Zwischenstellung sicherzustellen, während eine zweite Betätigung dieser Schiebehülse in der entgegengesetzten Richtung die vollständige Freigabe des Steckelements bewirkt, das dann aus dem Buchsenelement-körper entfernt werden kann, und bei der die Klauen (10a) des Verriegelungs-Innenrings (10) an ihrem freien Ende einen Vorsprung (10c) aufweisen, der in Bezug auf den Schlusskopf (10b) des genannten Endes seitlich angeordnet ist und in denselben Öffnungen (1b) des Körpers (1-2) wie die Klauen (11a) des Außenrings (11) sitzen, sodass in einer ersten sogenannten Kuppelstellungszeit die Klauen (11a) des Außenrings (11), die mit einem rampenförmigen Rand (1f) der vorerwähnten Öffnung zusammenwirken, die Vorsprünge (10c) in der ringförmigen Vertiefung (13b) des hineingesteckten Steckelements halten, während in einer zweiten Zeit die Köpfe (10b) der Klauen (10a) des Innenrings (10) mit der Wand (9c) der Axialbohrung der Schiebehülse zusammenwirken, um in die vorerwähnte ringförmige Vertiefung gedrückt zu bleiben und die Arretierung dieses Steckelements in der Dekompressions-Zwischenstellung sicherzustellen, wobei die ringförmige Vertiefung (13b) auf an sich bekannte Weise durch einen Kragen (13c) mit im Wesentlichen gerader Wand begrenzt wird.

2. Kupplung nach Anspruch 1, dadurch gekennzeichnet, dass der Außenring (11) Zähne (11b) aufweist, deren Länge kürzer ist als die der Klauen (11a), so dass sie mit Abflachungen (1d) zusammenwirken, die im Körper (1-2) des Buchsenelements (A) vorgesehen sind, um die Axialverschiebung des genannten Rings (11) unter der Wirkung von elastischen Einrichtungen (12) zu begrenzen, die ihm zugeordnet sind.

3. Kupplung nach einem der Ansprüche 1 und 2, dadurch gekennzeichnet, dass der Betätigungsring (8-9) wenigstens einen Fuß (9b) umfasst, der sich auf dem Außenring (11) abstützen kann, um seine Verschiebung gegen elastische Einrichtungen (12) sicherzustellen, die ihm zugeordnet sind.

## Claims

1. Quick-release coupling for the coupling of pipes, comprising a female element (A), a male element (B) and a locking mechanism, of the type in which the locking mechanism comprises a female element (A) to immobilise the male element (B) axially once the fixing of the latter inside the female element has caused a loaded valve (3) mounted in the female element to open, which comprises two annular bodies in the form of rings (10, 11) provided with longitudinal claws (10a, 11a) and engaged one inside the other between the body (1-2) of the female element and a handling sheath (8-9) which moves axially, the two ends of the said claws cooperating, via openings made in the said body, with an annular locking depression (13b) formed in the body (13) of the male element to ensure that the latter is locked in the coupled position, and after a first action of the operator on the sleeve, the said male element is immobilised in an intermediate decompression position, while a second action in the opposite direction on the sheath allows the complete release of the male element which can then be taken out of the body of the female element, in which the claws (10a) of the inner locking ring are provided at their free end with a protuberance (10c) arranged laterally relative to the terminal head (10b) of the said end and are engaged in the same openings (1b) of the body (1-2) as the claws (11a) of the outer ring (11), such that in a first situation, called the coupled position, the claws (11a) of the outer ring (11) cooperate with a ramp-shaped edge (1f) of the aforesaid openings, holding the protuberances (10c) pressed into the annular depression (13b) of the attached male element, while in a second situation the heads (10b) of the claws (10a) of the inner ring (10) cooperate with the wall (9c) of the axial opening of the sheath to remain pressed into the aforesaid annular depression, so ensuring the immobilisation of the said male element in its intermediate decompression position, the annular depression (13b) being in a manner known as such edged by a collar (13c) whose wall is substantially straight.

2. Coupling according to Claim 1,
**characterised in that**
the outer ring (11) is provided with teeth (11b) whose length is shorter than that of the claws (11a) so as to cooperate with flat surfaces (1d) formed on the body (1-2) of the female element (A) to restrict the axial movement of the said ring (11) under the action of elastic means (12) associated therewith.

3. Coupling according to either of Claims 1 and 2,
**characterised in that**
the handling sheath (8-9) comprises at least one lug (9b) that can rest against the outer ring (11) to bring about its displacement against the action of the elastic means (12) associated therewith.
